# EUROPEAN PATENT APPLICATION

(11) **EP 4 692 772 A1**
(43) Date of publication of application: **11.02.2026**
(21) Application number: 25191530.2
(22) Date of filing: 24.07.2025
(51) Int. Cl.: G01N 21/90, G06T 7/00

(54) **METHOD FOR CALCULATING A PARAMETER REPRESENTING THE IMPURITIES IN A LIQUID PRODUCT INSIDE A CONTAINER, RELATED CALCULATING APPARATUS AND COMPUTER PROGRAM**

(30) Priority: 06.08.2024 IT 202400018430
(71) Applicant: G.D S.p.A., 40133 Bologna (IT)
(72) Inventor: MERLO PICH, Jacopo, Bologna (IT); COPPI, Dalia, Bologna (IT); CESARINI, Maria Eleonora, Bologna (IT)
(74) Representative: Bianciardi, Ezio

(57) **Abstract**

A method, implemented by a computer, for calculating a parameter representing the impurities in a liquid product inside a container (3), comprising the steps of receiving a plurality of images of at least one portion of the liquid in the container (3), captured at different time instants; and analysing the images to identify foreign bodies in the liquid and determine whether each foreign body corresponds to a gas bubble. The method further comprises the steps of recognizing the same foreign body in different images so as to define foreign body sequences, counting the number of foreign bodies detected excluding the foreign body sequences the foreign bodies of which have been recognized as gas bubbles in at least one image, and finally determining the parameter representing the impurities in the liquid product based on the count.

## Description

The present invention relates to a method, implemented by a computer, for calculating a parameter representing the impurities in a liquid product inside a container, a related calculating apparatus, and a computer program for implementing the aforesaid method.

The present invention is directed to the field of inspection machines, in particular those machines that check a liquid product (e.g., a drug) or a suspension or a gel inside a container in order to detect any impurities in the product.

In particular, in the pharmaceutical industry it is necessary to ensure the quality of the product during and after packaging, therefore the inspection machine checks the quality of the product to ensure that any impurities in the drug (introduced, for example, during the entire bottling process) are contained within a given level of acceptability.

Inspection machines generally check the impurities only in the product inside the container, excluding any checks on the container itself.

Therefore, the need is known to identify the possible presence of foreign bodies in a liquid product inside a container so as to decide, based on predetermined criteria, to reject, as needed, such a product avoiding the sale thereof.

Traditionally, in order to detect the impurities in the product, the container with the liquid therein is rotated at a relatively high speed so as to agitate the particles in the liquid; the container is then stopped suddenly so that the liquid inside the container continues moving, even though the container is stationary.

In the instants after the rotation of the container is stopped, the liquid inside the container continues moving and therefore also the foreign bodies immersed in the liquid are moving in the liquid itself.

In such a context, images are captured in consecutive time instants. Therefore, by observing the images themselves, differences in the positioning and shape of the foreign bodies in the liquid are noticed.

It is then important to identify the nature of the foreign bodies since in certain products, due to the properties of the liquid or the shape of the container, during the rotation of the container, different sized bubbles are formed, which are not easily distinguishable from the impurities contained in the liquid.

For example, saline and sugar solutions highlight a greater accentuated tendency to form bubbles than other types of solutions.

Containers having bases with elliptic sections also have a greater tendency to form bubbles in the liquid during the rotation of the container than containers having cylindrical bases.

The amount of the liquid inside the container also plays a significant role on the amount of bubbles formed therein; indeed, the more the container is filled, the smaller the number of bubbles that appear therein.

Generally, traditional algorithms are used to classify the foreign body as an air bubble due to the agitation of the particles in the liquid, or as an actual impurity, which thus would contaminate the product itself.

The need is particularly felt to distinguish with certainty whether the foreign body identified is an air bubble or an impurity, i.e., a foreign body having a different nature, since should the liquid contain a number of foreign bodies classified as impurities greater than a level of acceptability, the product is rejected.

Therefore, an incorrect identification of a foreign body in the liquid results in a false reject.

A particularly felt issue is due to the fact that the presence of moving air bubbles deceives traditional algorithms since they cannot be distinguished from the impurities.

Indeed, the traditional algorithm classifies only the larger bubbles with a given certainty since they are typically rounded bodies.

When micro-bubbles, or bubbles with different shapes from the conventional shape of a bubble due to refraction phenomena, or bubble agglomerates or even crossed bubbles are involved, the traditional algorithms cannot detect them with sufficient accuracy and therefore these latter instances cause false rejects of the products.

Therefore, there is a need to classify impurities, bubbles and micro-bubbles, which cannot be seen with the naked eye, in a highly accurate manner, as such based on a value assigned to a specific parameter.

A particularly felt need in the industry in hand is to have a method for calculating a parameter representing the impurities in a liquid product inside a container which is capable of overcoming the limits of the known art and meeting the aforesaid needs.

It is the object of the present invention to provide a method, implemented by a computer, for calculating a parameter representing the impurities in a liquid product inside a container, which is capable of overcoming the limits of the prior art and meeting the aforesaid needs, in particular which allows determining, with high reliability, the parameter representing the impurities (in order to possibly reject the product).

It is also the object of the present invention to provide an apparatus for calculating a parameter representing the impurities in a liquid product which is capable of overcoming the limits of the prior art and meeting the aforesaid needs.

It is a further object of the present invention to provide a computer program which, when run on a computer, processes the method of the invention, which is capable of overcoming the limits of the prior art and meeting the aforesaid needs.

The technical task and objects specified are substantially achieved by a method for calculating a parameter representing the impurities in a liquid product inside a container, the related calculating apparatus and the related computer program comprising the technical features set forth in one or more of the appended claims.

Further features and advantages of the present invention will become more apparent from the indicative, and therefore non-limiting, description of an embodiment of a method for calculating a parameter representing the impurities in a liquid product inside a container, the related calculating apparatus and computer program.

This description will be given below with reference to the accompanying drawings, provided only for indicative and thus non-limiting purposes, in which:
- Figure 1 shows a diagram representing a calculating apparatus of the present invention;

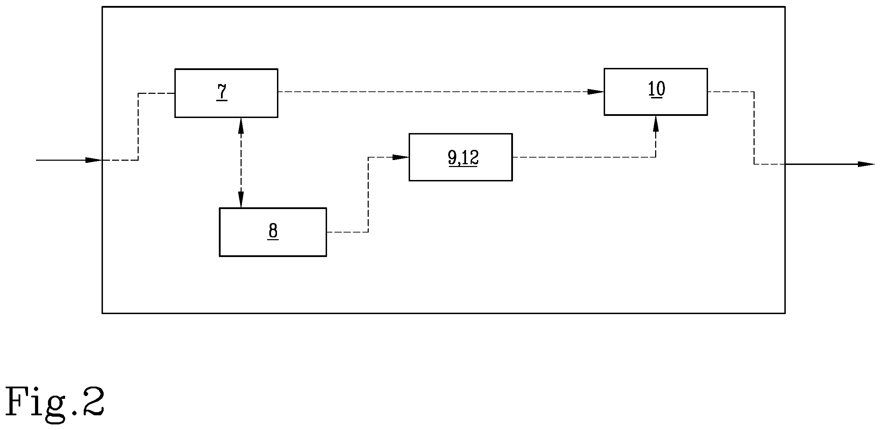

- Figure 2 diagrammatically shows a computer of the calculating apparatus in Figure 1;
- Figure 3 and Figure 4 diagrammatically show different steps of the method of the present invention.

The method of the present invention is a method, implemented by means of a computer, for calculating a parameter representing the impurities (e.g., the number of impurities) in a (preferably, but not necessarily, pharmaceutical) liquid product inside a container.

More precisely, the method of the present invention comprises the steps of receiving a plurality of images of at least one portion of the liquid in the container 3, captured by means of a capturing device 1 at different time instants, and analysing the images.

The container 3 employed can be of different type, e.g., a vial, a syringe, a bottle, a bag, or other types.

The container 3 can be made of materials such as clear glass, amber glass, plastic or other materials, for example.

In particular, the container 3 is rotated by means of an actuator 6 and then is stopped.

When the rotation of container 3 is interrupted, an image sequence of a portion of the liquid is captured.

The image sequence shows an area of interest, previously determined, for the purposes of the particle analysis.

The term "area of interest" means the area enclosed between the right edge of the product, the bottom and the filling level (height), the latter being variable from one product to the other.

Once these points are identified, the working area for the particle analysis can be established.

The method comprises a step of identifying a recurring background based on at least one of the images received.

The step of analysing the images comprises a step of eliminating the recurring background in each image received.

In other words, before capturing the image sequence consisting of a plurality of images (for example, consisting of 28 images), a search is performed for possible critical zones (hereinafter also referred to as cosmetic defects), such as marks or scratches on the container 3, but also stationary bubbles attached to the container 3, for example.

Indeed, desensitizing these zones (through the step of identifying the recurring background and eliminating it) serves to avoid any product vibrations during the image capturing from causing cosmetic defects to appear as foreign bodies during the particle analysis, thereby affecting the determination of the parameter representing the impurities.

In other words, once the cosmetic defects are identified, they are then desensitized so as to create a mask so that the zones where these defects are present become, for all intents and purposes, blind zones (i.e., not subject to analysis) for the whole image sequence captured.

In the method of the present invention, the step of analysing the images consists in identifying the foreign bodies in the liquid present in the images and determining whether each foreign body identified corresponds to a gas bubble or micro-bubble.

The problem, solved by the method of the present invention, is that of identifying the micro-bubbles, i.e., bubbles so small that, if not properly focused on, are exactly equal to (and therefore indistinguishable from) the impurities in the liquid.

The method also comprises the step of recognizing the same foreign body in different images so as to define foreign body sequences.

Indeed, in order to classify a foreign body as a micro-bubble, the idea is to follow the trajectory of each foreign body, in the images captured at different time instants, in order to collect all the occurrences thereof in the image sequence and observe the evolution thereof in the various images. According to an aspect, the step of recognizing the same foreign body in different images so as to define foreign body sequences comprises a step of comparing at least two images based on criteria of shape and/or area similarity and/or positional proximity in different images and/or brightness criteria and/or chromatic parameters.

According to the present description, the step of recognizing the same foreign body in different images comprises a step of comparing the images in order to identify first common portions and second different portions in the images, the foreign body being contained in the second different portions.

The step of comparing the images, in pairs, in order to identify first common portions and second different portions in the images comprises a step of comparing temporally consecutive images.

More in detail, the step of comparing the images is carried out by a specific image processing unit 8 contained in the computer 5.

According to the present description, the step of comparing the images, in pairs, in order to identify first common portions and second different portions comprises a first step of comparing a first pair of images comprising a first image and a second image, with the second image temporally consecutive to the first image; and a second step of comparing a second pair of images comprising the second image and the third image, with the third image being temporally consecutive to the second image. The step of comparing the images, in pairs, comprises, after the first and second comparison steps, a step of searching for a common reference point 3a between the first and second pairs of images with reference to, and in association with, a foreign body detected.

If a common reference point 3a is found, the method of the present invention comprises a step of defining a foreign body sequence relating to the same foreign body in the images of the first and second pairs of images.

Such a created sequence is saved in the unit 7 for tracking objects, in particular image sequences, inside the computer 5.

The step of comparing the images, in pairs, in order to identify first common portions and second different portions in the images comprises, for a pair of images comprising a first and a second image, a step of performing a subtraction between the levels of brightness and/or colours of a first image and a second image, to generate a difference image representing a difference of levels of brightness and/or colours. Difference image means an image depicting exclusively the differences between an initial image and a temporally consecutive image, at the brightness and/or colour level.

The step of comparing the images, in pairs, in order to identify first common portions and second different portions in the images comprises a step of binarizing the difference image.

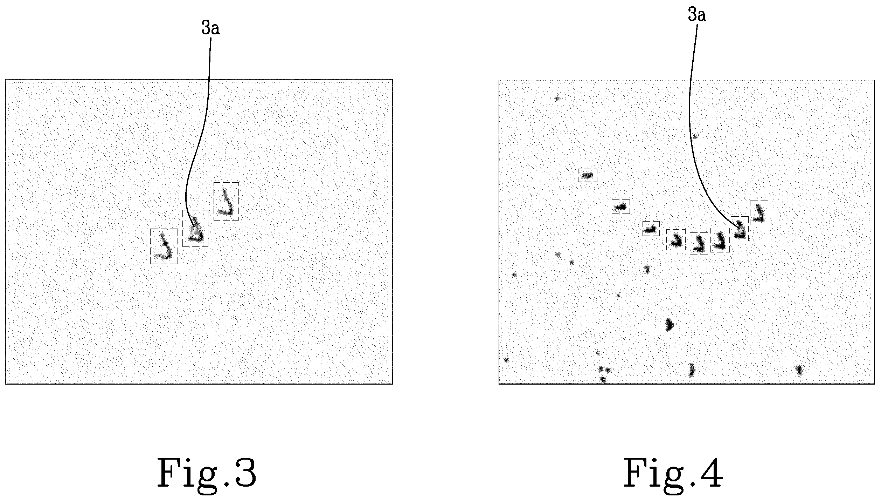

In other words, such a binarizing step includes creating a difference image substantially with two levels of brightness/colour (for example, of the black-white type, as shown in Figures 3 and 4).

According to the above description, the method includes, starting from a sequence of a plurality (e.g., 28) of images taken of the same product, generating, for each pair of images in the sequence, a new image obtained as an absolute value of the difference between the pair. According to the method, a correct extraction of all the foreign bodies moving in these two time instants is obtained from this difference between the pair.

Note that the mask (i.e., the subtraction of the recurring background) is applicable to such a difference or to the individual images captured.

For example, observing the first two iterations, two difference images are obtained: the subtraction between the first and second images is in the first difference image, and the subtraction between the second and third images is in the second difference image.

The idea behind the invention is that, given two consecutive binary difference images, if a foreign body or a portion thereof is in the same position in both difference images, then the foreign body will leave a trace in these three images.

If not, and for example the foreign body appears and disappears, there would not be any common points 3a or foreign bodies close to the common point 3a and therefore this foreign body is not catalogued as such.

As shown in Figure 3, once a common point 3a is found, the closest points and/or points with similar sizes are collected, one for each image, thus building the first step of the sequence.

Advantageously, due to the generation of such a sequence, it is possible to follow the evolution of each foreign body in the liquid, in the different temporally consecutive images.

The steps of the method described above are carried out with two pairs of images; therefore, they are obtained from a sequence consisting of three consecutive images.

The same steps can also be carried out in the event of a greater number of pairs of images since each sequence can consist of a greater number of images, twenty-eight images, for example.

For example, should the sequence consist of four images, three difference images would be obtained: the first difference image would contain the subtraction between the first and second images, the second difference image would contain the subtraction between the second and third images, and the third difference image would contain the subtraction between the third and fourth images.

At each iteration, the method continues searching for common points between the current difference and the previous difference and verifies, for each common point 3a found, whether it belongs to an old sequence or not.

If the common point 3a found can be traced back to an old sequence, then the new image of the foreign body is added to the pre-existing collection, as seen in the sequence shown in Figure 4.

Therefore, from these difference images, the determination of a sequence related to a foreign body, from which it is possible to follow the evolution of each foreign body in the liquid, is obtained.

In other words, through considerations on position and size, the foreign bodies detected are each associated with a sequence, thus building a history of the appearances of the foreign body over time, i.e., between the different images.

When the common point between the sequence of the difference images stops belonging to the sequence to which the common point found by comparing the two previous difference images belonged, the sequence ends, which means that we have lost track of the foreign body in the liquid, i.e., the foreign body is no longer in the subsequent images.

Such an approach works perfectly under nominal conditions, where each foreign body is well isolated from the others. However, when the trajectories of different foreign bodies intersect, or in a highly chaotic scenario, the tracking becomes unreliable and computationally costly. Therefore, the suggested method advantageously starts to track only if the number of foreign bodies detected is below a given threshold.

In the event of a chaotic scenario, according to the present description, all the foreign bodies are considered individually, without attempting to reconstruct the trajectory thereof, and therefore associating them with a specific sequence.

Furthermore, according to the invention, the method comprises the step of counting the number of foreign bodies detected, excluding the foreign body sequences the foreign bodies of which have been recognized as gas bubbles, in at least one image.

According to an aspect of the method, the step of determining whether the foreign body identified corresponds to a gas bubble or impurity is carried out based on criteria of shape and/or colour and/or brightness and/or size of the foreign bodies.

In other words, if it is found that the foreign body had features of a bubble in one or more sequence images, then all the foreign bodies in the sequence are labelled as bubbles and thereby the erroneous classification for which the bubble in a particular image is classified as an impurity (which could thus imply, under given conditions, the reject of the product) is avoided.

Therefore, if the foreign body is also in only one sequence image as a bubble or micro-bubble, then the foreign body in all the other images is not counted as an impurity detected in the product.

Furthermore, the method comprises the step of determining the parameter representing the impurities in the liquid product based on the count carried out.

The step of determining whether each foreign body identified corresponds to a gas bubble comprises a step of classifying, by means of a classification module 12, a portion of image containing a representation of a foreign body.

The classification algorithm could generally be of any kind. Advantageously, according to another aspect, the classification module 12 is an artificial intelligence module.

Preferably, the artificial intelligence module comprises a pre-trained classifier.

In other words, in order to classify all the foreign bodies tracked in the tracking unit 7, a neural network unit 9 is present in the computer 5.

The neural network 9 is preferably of the convolutional type (CNN neural network 9, which is referred to as CNN 9 in the description below).

The step of determining whether each foreign body identified corresponds to a gas bubble comprises a step of sending to the pre-trained classifier a portion of an image containing a representation of a foreign body detected, and a step of calculating, by means of the pre-trained classifier, a probability that said foreign body corresponds to a bubble.

According to an aspect, the previously pre-trained CNN 9 establishes with a probability which foreign body is a bubble and which is not, allowing all those sequences containing bubbles (i.e., those for which the foreign body was identified as a bubble in at least one image) to be eliminated from the foreign body count.

The method also comprises the step of training the classifier based on a first group of images, containing images representing foreign bodies corresponding to gas bubbles, and based on a second group of images, containing images representing foreign bodies corresponding to impurities other than the gas bubbles.

In other words, the CNN 9 is pre-trained with images which were provided as input and classifies all the individual images of foreign bodies of the sequences to assign a binary percentage (bubble/not bubble) to each input image.

For all intents and purposes, such a training is a training of the supervised type.

In particular, in order to train the CNN 9, two groups with an equal number of images are provided as input so as to create a balanced initial dataset. One group contains only images in which bubbles having several shapes, bubble agglomerates, micro-bubbles and bubbles with non-regular shape are depicted, so as to have as varied a training as possible.

The second group contains only images in which impurities are depicted. The training of the CNN 9 is binary since the probability 100 or 0 is associated with each image input to the network depending on whether it is a bubble or an impurity.

Each image of the sequences tracked before being provided as input to the CNN 9 must be transformed to the correct size, i.e., into an image having a preset number of pixels, e.g., a 34x34 pixel image.

The CNN 9 consists of four convolutional layers where additions and multiplication are performed between neurons, each followed by a max-pooling layer.

The CNN 9 employed follows a scheme common to the CNNs for the classification of the images.

The features are gradually extracted from the input image through convolutional layers and pooling, followed by layers completely connected for the classification.

The ReLU activation function is used in most of the network to introduce the non-linearity, while the sigmoid activation function in the output layer is functional to the binary classification problems.

The network has two classes, therefore the output is a binary probability having a value between 0 and 100, then the network returns a probability that it is a bubble or non-bubble for each image.

In other words, the conveniently trained CNN 9 is responsible for deciding the nature of the previously detected foreign body with a given probability. The neural network CNN 9 is thus a classifier downstream of which there is a processing unit 10 which recomposes the sequences of foreign bodies as originally tracked while additionally having, for each sequence image, a probability value which allows classifying the foreign body examined as a bubble or non-bubble.

If at least one image among all those forming a specific sequence is classified as a bubble, then the whole foreign body sequence is rejected and eliminated from the count of impurities.

If the foreign body is at least classified once as a bubble/micro-bubble, it is not an impurity, and therefore the product containing it does not need to be rejected due to such a bubble/micro-bubble.

The present invention also relates to an apparatus for calculating a parameter representing the impurities in a liquid product inside a container, comprising a computer configured to implement the steps of the aforesaid method.

The calculating apparatus further comprises an image capturing device 1 configured to capture the plurality of images of at least one portion of the liquid in the container 3, and an illuminating device 4 arranged to emit light and illuminate the liquid in the container 3. Preferably, the light is a white light.

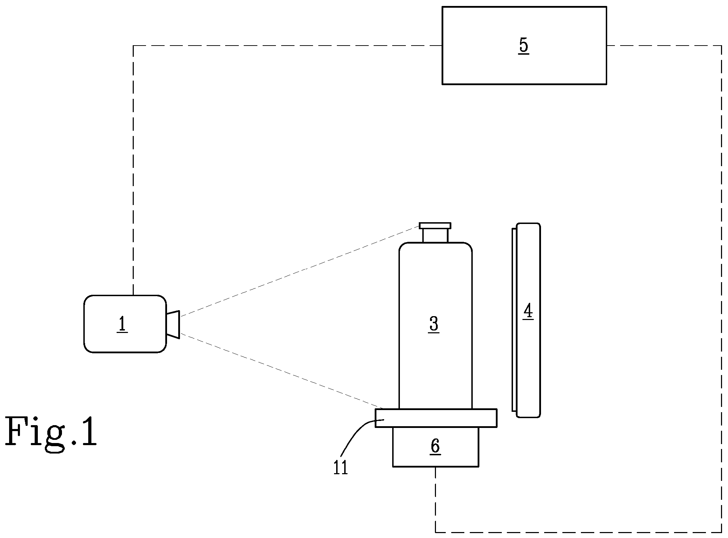

According to an embodiment shown in Figure 1, the illuminating device 4 is located behind the container 3. Indeed, the liquid in the container 3 is backlit since the illuminating device 4 is located downstream of the container 3 in the optical path of the light between the illuminating device 4 and the image capturing device 1.

According to a further aspect, not shown in the accompanying Figures, the calculating apparatus comprises an optical reflection device (e.g., a mirror) located in an optical path of the light between the illuminating device 4 and the image capturing device 1.

Moreover, according to further different embodiments, the illuminating device 4 can illuminate different portions of the container 3 either directly or non-directly.

According to an embodiment, the illuminating device 4 can be arranged laterally with respect to the container 3.

According to yet another embodiment, the illuminating device 4 can be arranged underneath the container 3.

According to an embodiment, the image capturing device 1 can be arranged laterally with respect to the container 3 (with optical axis orthogonal or inclined with respect to the vertical).

According to a further aspect, the calculating apparatus comprises a support member 11 for the container 3 and an actuator 6 connected to the support member 11 for rotating it.

Such an actuator 6 is conveniently connected (either directly or indirectly) to the computer 5 so that as soon as the rotation of the container 3 is stopped, the computer 5 establishes the beginning of the image capture performed by the capturing device 1.

The image capturing device 1 is configured to capture the images in a preset step relationship with a stop signal of the actuator 6.

In other words, the image capturing device 1 starts capturing the images in the region of interest of the liquid when the actuator 6, and therefore also the container 3, stops.

The liquid inside the container 3 continues moving for a given time interval after the actuator 6 stops, in which time interval the foreign bodies in the liquid also continue moving.

Therefore, by tracking the foreign body image sequence in this time interval there is a possibility to see the evolution of the same foreign bodies in the liquid inside the container 3 over time.

The steps performed by the tracking 7 and processing 8 unit follow, at the end of which the differences between two consecutive images - which have at least one point in common and allow identifying at least the start of a sequence - are provided as input to the CNN 9.

The CNN 9 classifies each image by assigning it with a binary probability according to which the bubble/non-bubble classification is obtained.

All those sequences containing at least one difference image which was classified as a bubble are eliminated from the count of the total sequences.

Indeed, the bubbles and micro-bubbles inside the products are allowed, unlike the impurities, which imply the reject of the product itself.

The minimum number of images of the entire tracked sequence that must be classified as bubbles and the probability beyond which the image is classified as a bubble are non-fixed data that are parametrizable on the machine as a function of the specific product on which the inspection machine is working.

The present invention further comprises a computer program comprising instructions which, when run on a computer, cause the computer to implement the method of the present description.

The advantage of the present invention is to provide a method for tracking foreign bodies identified in the liquid by creating an image sequence of foreign bodies on which a parameter identifying the entity of the foreign body (bubble or impurity) is determined.

Advantageously, the present invention allows detecting the foreign bodies in the liquid and carries out a "tracking" to obtain a collection of the evolutions of the individual foreign body.

Considering a specific sequence, if the foreign body is also classified in a single Image of the sequence as a bubble or micro-bubble, then all the images of the same sequence are rejected because they contain bubbles and not impurities. In fact, it is possible for the foreign body to occur as a bubble or micro-bubble only in one difference image of the whole tracked sequence.

Advantageously, by using the conveniently trained CNN 9, the suggested method is responsible for deciding the nature of the detected foreign body with a preset probability.

The method excludes the image sequences in which the foreign bodies were recognized, in at least one image, as gas bubbles.

Therefore, the suggested method aims not only to identify the bubbles individually, but also to track a history of each foreign body encountered in order to eliminate the whole sequence of images tracked if one or more bubbles were identified.

It is thus possible to eliminate bubbles even when they do not exhibit features directly associated with the nature thereof.

Advantageously, by providing this method to an inspection machine, it is possible to have an increased certainty that the product will be rejected in the presence of bubbles and micro-bubbles, thus ensuring good performance even at high rotation speeds of the product. Advantageously, since such a method also allows classifying micro-bubbles as such, without confusing them with impurities, it allows rejecting a smaller amount of products which can be sold.

## Claims

1. A method, implemented by a computer (5), for calculating a parameter representing the impurities in a liquid product inside a container (3), comprising the following steps:
- receiving a plurality of images of at least one portion of the liquid in the container (3), captured at different time instants;
- analysing the images in order to:
o identify foreign bodies in the liquid present in the images;
o determine whether each foreign body identified corresponds to a gas bubble,
the method being **characterized in that** it further comprises the steps of:
- recognizing the same foreign body in different images so as to define foreign body sequences;
- counting the number of foreign bodies detected, excluding the foreign body sequences whose foreign bodies have, in at least one image, been recognized as being gas bubbles;
determining the parameter representing the impurities in the liquid product, based on said count.

2. The method according to claim 1, wherein the step of determining whether each foreign body identified corresponds to a gas bubble or is an impurity is carried out on the basis of criteria of shape and/or colour and/or brightness and/or size of the foreign bodies.

3. The method according to claim 1 or 2, wherein the step of recognizing the same foreign body in different images so as to define foreign body sequences comprises a step of comparing at least two images on the basis of criteria of shape and/or area similarity and/or positional proximity in different images and/or brightness criteria and/or chromatic parameters.

4. The method according to any one of the preceding claims, wherein the step of recognizing the same foreign body in different images comprises a step of comparing said images, in pairs, in order to identify first, common portions and second, different portions in the images, the foreign body being contained in said second, different portions.

5. The method according to the preceding claim, wherein the step of comparing said images, in pairs, in order to identify first, common portions and second, different portions in the images comprises a step of comparing temporally consecutive images.

6. The method according to claim 4 or 5, wherein the step of comparing said images, in pairs, in order to identify first, common portions and second, different portions in the images comprises:
- a first step of comparing a first pair of first images comprising a first image and a second image, where said second image is temporally consecutive to the first image;
- a second step of comparing a second pair of images comprising the second image and the third image, where said third image is temporally consecutive to the second image.

7. The method according to the preceding claim, wherein the step of comparing said images, in pairs, comprises, after the first and second steps of comparing, a step of searching for a common reference point between said first and second pairs of images with reference to, and in associations with, a foreign body detected.

8. The method according to the preceding claim, wherein the step of comparing said images, in pairs, comprises, if a common reference point (3a) is found, a step of defining a foreign body sequence relating to the same foreign body present in the images of the first and second pairs of images.

9. The method according to any one of claims 4 to 8, wherein the step of comparing said images, in pairs, in order to identify first, common portions and second, different portions in the images comprises, for a pair of images comprising a first and a second image, a step of performing a subtraction between the levels of brightness and/or the colours of a first image and a second image, to generate a difference image representing a difference of levels of brightness and/or colours.

10. The method according to the preceding claim, wherein the step of comparing said images, in pairs, in order to identify first, common portions and second, different portions in the images comprises a step of binarizing said difference image.

11. The method according to any one of the preceding claims, comprising a step of identifying a recurring background, based on at least one of said received images, and wherein the step of analysing the images comprises a step of removing said recurring background from each received image.

12. The method according to any one of the preceding claims, wherein the step of determining whether each foreign body identified corresponds to a gas bubble comprises a step, via a classification module (12), of classifying a portion of image containing a representation of a foreign body.

13. The method according to claim 12, wherein the classification module (12) comprises an artificial intelligence module defined by a pre-trained classifier.

14. The method according to the preceding claim, wherein the step of determining whether each foreign body identified corresponds to a gas bubble comprises a step of sending to the pre-trained classifier a portion of an image containing a representation of a foreign body detected, and a step, via the pre-trained classifier, of calculating a probability that said foreign body corresponds to a bubble.

15. The method according to claim 13 or 14, comprising a step of training the pre-trained classifier based on a first group of images, containing images representing foreign bodies corresponding to gas bubbles, and based on a second group of images, containing images representing foreign bodies corresponding to impurities, different from said gas bubbles.

16. An apparatus for calculating a parameter representing the impurities in a liquid product inside a container (3), comprising a computer (5) configured to implement the steps of the method according to the preceding claims.

17. The calculating apparatus according to claim 16, further comprising an image capturing device (1) configured to capture the plurality of images of at least one portion of the liquid in the container (3) and to send them to the computer (5), and an illuminating device (4) disposed to emit light directed at said container (3) and to illuminate the liquid in the container (3).

18. The calculating apparatus according to claim 17, comprising an optical reflection device, located in a path of the light between the illuminating device (4) and the image capturing device (1).

19. The calculating apparatus according to claim 17 or 18, comprising a support member (11) for said container (3) and an actuator (6), connected to the support member (11) to set it in rotation, the image capturing device (1) being configured to capture said images in a predetermined phase relationship with a signal to stop said actuator (6).

20. A computer program comprising instructions which, when run on a computer, cause the computer to implement the method of claims 1 to 15.
